# EUROPEAN PATENT APPLICATION

(11) **EP 3 413 176 A1**
(43) Date of publication of application: **12.12.2018**
(21) Application number: 17209915.2
(22) Date of filing: 22.12.2017
(51) Int. Cl.: G06F 3/041, G06F 3/0488, G06F 3/0484, G06F 3/0482

(54) **MOBILE TERMINAL AND METHOD FOR CONTROLLING THE SAME**

(30) Priority: 05.06.2017 KR 20170069708
(71) Applicant: LG Electronics Inc., Yeongdeungpo-gu Seoul, 07336 (KR)
(72) Inventor: JANG, Yujune, 06772 Seoul (KR); KIM, Kangmin, 06772 Seoul (KR)
(74) Representative: Beyer, Andreas

(57) **Abstract**

A mobile terminal including a touch screen; and a controller configured to display multiple items of content on the touch screen, in response to a first touch input on the touch screen corresponding to a force touch, execute an editing mode for editing the multiple items of content, in response to a second touch input on the touch screen, select at least two items of content from among the multiple items of content, and perform a function using the selected at least two items.

## Description

### BACKGROUND OF THE DISCLOSURE

### 1. Field of the Disclosure

The present disclosure relates to a mobile terminal that is capable of fast editing content utilizing a touch input that satisfies a condition associated with a touch force and a method of controlling the mobile terminal.

### 2. Background of the Disclosure

Terminals can be generally classified as mobile/portable terminals or stationary terminals. Mobile terminals can also be classified as handheld terminals or vehicle mounted terminals.

Mobile terminals have become increasingly more functional. Examples of such functions include data and voice communications, capturing images and video via a camera, recording audio, playing music files via a speaker system, and displaying images and video on a display. Some mobile terminals include additional functionality which supports game playing, while other terminals are configured as multimedia players. More recently, mobile terminals have been configured to receive broadcast and multicast signals which permit viewing of content such as videos and television programs. Efforts are ongoing to support and increase the functionality of mobile terminals. Such efforts include software and hardware improvements, as well as changes and improvements in the structural components.

In recent years, new interfaces have been developed that use the technology of recognizing a force of a touch that is applied to a touch screen. Accordingly, there is an increasing need for the technology of providing various functions using the force of the touch. Further, due to the restriction of a touch input technique that is different from an input technique that uses a keyboard, mobile terminals in the related art have difficulty selecting multiple items of content and processing the selected multiple items of content at the same time. Accordingly, the present invention proposes a method of selecting multiple items of content and the selected multiple items of content at the same time utilizing the force of the touch.

### SUMMARY OF THE DISCLOSURE

Therefore, an aspect of the detailed description is to provide a method of fast editing multiple items of content using a touch input that satisfies a condition associated with a touch force.

Accordingly, another aspect of the present invention provides a method of selecting multiple items of content and the selected multiple items of content at the same time utilizing the force of the touch.

Another aspect of the detailed description is to provide a method of fast accessing items of content to which different links are connected.

To achieve these and other advantages and in accordance with the purpose of this specification, as embodied and broadly described herein, there is provided a mobile terminal including: a touch screen on which multiple items of content are displayed; and a controller that performs an editing mode in which editing of the multiple items of content is possible, when a touch input that satisfies a condition associated with a touch force is detected on the touch screen, that selects at least one item of content from among the multiple items of content based on application of a second touch input different from the first touch input, in the editing mode, and that processes at least one or more of the items of content in state of being associated with each other, in which the controller performs a function associated with the at least one item of content, using the at least one item of content that is processed, when a user control command for performing the function associated with the at least one item of content is input.

To achieve these and other advantages and in accordance with the purpose of this specification, as embodied and broadly described herein, there is provided a method of controlling a mobile terminal, including: displaying multiple items of content on a touch screen; performing an editing mode in which editing of the multiple items of content is possible, in response to detection of a touch input that satisfies a condition associated with a touch force on the touch screen; selecting at least one item of content from among the multiple items of content based on a second touch input different from the first touch input, in the editing mode; processing at least one or more of the items of content associated with each other; and performing a function associated with the at least one item of content, using the at least one item of content that is processed, when a user control command for performing the function associated with the at least one item of content is input.

Further scope of applicability of the present invention will become apparent from the detailed description given hereinafter. However, the detailed description and specific examples, while indicating preferred embodiments of the invention, are given by illustration only, since various changes and modifications within the spirit and scope of the invention will become apparent to those skilled in the art from this detailed description.

### BRIEF DESCRIPTION OF THE DRAWINGS

The accompanying drawings, which are included to provide a further understanding of the disclosure and are incorporated in and constitute a part of this specification, illustrate exemplary embodiments and together with the description serve to explain the principles of the disclosure.

In the drawings:
FIG. 1A is a block diagram illustrating a mobile terminal according to an embodiment of the present invention;
FIGs. 1B and 1C are conceptual diagrams illustrating an example of the mobile terminal according to an embodiment of the present invention, which is viewed from different directions;
FIG. 2A is a conceptual diagram illustrating a general touch input and a touch input satisfying a condition associated with a touch force;
FIG. 2B is a conceptual diagram illustrating a multi-force touch;
FIG. 3 is a flowchart illustrating a method in which the mobile terminal according to an embodiment of the present invention fast edits multiple items of content utilizing a force touch input;
FIGs. 4A to 4C are conceptual diagrams illustrating a control method in FIG. 3;
FIGs. 5A and 5B are conceptual diagrams illustrating another embodiment in which a function of copying and pasting the multiple items of content is performed using the force touch input;
FIGs. 6A to 6C are conceptual diagrams illustrating a method of editing content that is selected in an editing mode;
FIGs. 7A to 9C are conceptual diagrams illustrating specific description; and
FIGs. 10A to 10C are diagrams illustrating an embodiment in which the application is accessed utilizing the force touch input.

### DETAILED DESCRIPTION OF THE DISCLOSURE

Description will now be given in detail according to exemplary embodiments disclosed herein, with reference to the accompanying drawings. For the sake of brief description with reference to the drawings, the same or equivalent components may be provided with the same or similar reference numbers, and description thereof will not be repeated. In general, a suffix such as "module" and "unit" may be used to refer to elements or components. Use of such a suffix herein is merely intended to facilitate description of the specification, and the suffix itself is not intended to give any special meaning or function. The accompanying drawings are used to help easily understand various technical features and it should be understood that the embodiments presented herein are not limited by the accompanying drawings. As such, the present disclosure should be construed to extend to any alterations, equivalents and substitutes in addition to those which are particularly set out in the accompanying drawings.

Although the terms first, second, etc. may be used herein to describe various elements, these elements should not be limited by these terms. These terms are generally only used to distinguish one element from another. When an element is referred to as being "connected with" another element, the element can be connected with the other element or intervening elements may also be present. In contrast, when an element is referred to as being "directly connected with" another element, there are no intervening elements present.

A singular representation may include a plural representation unless it represents a definitely different meaning from the context. Terms such as "include" or "has" are used herein and should be understood that they are intended to indicate an existence of several components, functions or steps, disclosed in the specification, and it is also understood that greater or fewer components, functions, or steps may likewise be utilized.

Mobile terminals presented herein may be implemented using a variety of different types of terminals. Examples of such terminals include cellular phones, smart phones, user equipment, laptop computers, digital broadcast terminals, personal digital assistants (PDAs), portable multimedia players (PMPs), navigators, portable computers (PCs), slate PCs, tablet PCs, ultra books, wearable devices (for example, smart watches, smart glasses, head mounted displays (HMDs)), and the like.

By way of non-limiting example only, further description will be made with reference to particular types of mobile terminals. However, such teachings apply equally to other types of terminals, such as those types noted above. In addition, these teachings may also be applied to stationary terminals such as digital TV, desktop computers, and the like.

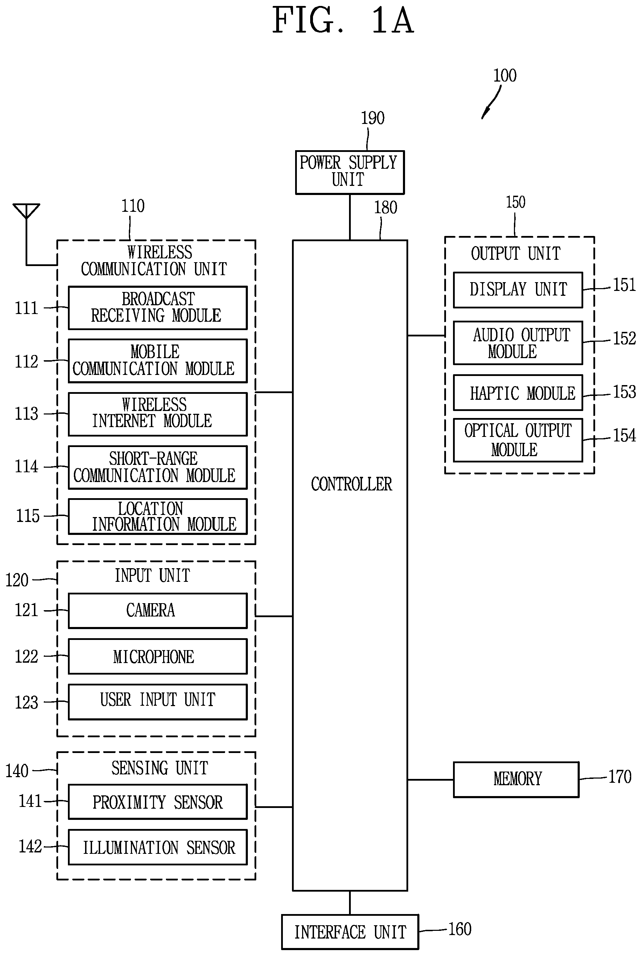

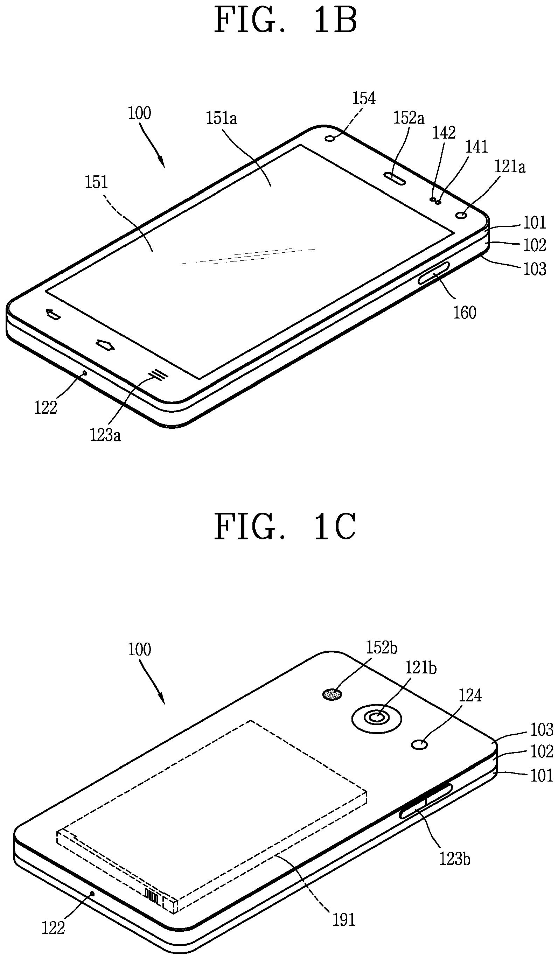

Reference is now made to FIGS. 1A-1C, where FIG. 1A is a block diagram of a mobile terminal in accordance with the present disclosure, and FIGS. 1B and 1C are conceptual views of one example of the mobile terminal, viewed from different directions.

The mobile terminal 100 is shown having components such as a wireless communication unit 110, an input unit 120, a sensing unit 140, an output unit 150, an interface unit 160, a memory 170, a controller 180, and a power supply unit 190. Implementing all of the illustrated components is not a requirement, and that greater or fewer components may alternatively be implemented.

Referring now to FIG. 1A, the mobile terminal 100 is shown having wireless communication unit 110 configured with several commonly implemented components. For instance, the wireless communication unit 110 typically includes one or more components which permit wireless communication between the mobile terminal 100 and a wireless communication system or network within which the mobile terminal is located.

The wireless communication unit 110 typically includes one or more modules which permit communications such as wireless communications between the mobile terminal 100 and a wireless communication system, communications between the mobile terminal 100 and another mobile terminal, communications between the mobile terminal 100 and an external server. Further, the wireless communication unit 110 typically includes one or more modules which connect the mobile terminal 100 to one or more networks. To facilitate such communications, the wireless communication unit 110 includes one or more of a broadcast receiving module 111, a mobile communication module 112, a wireless Internet module 113, a short-range communication module 114, and a location information module 115.

The input unit 120 includes a camera 121 for obtaining images or video, a microphone 122, which is one type of audio input device for inputting an audio signal, and a user input unit 123 (for example, a touch key, a push key, a mechanical key, a soft key, and the like) for allowing a user to input information. Data (for example, audio, video, image, and the like) is obtained by the input unit 120 and may be analyzed and processed by controller 180 according to device parameters, user commands, and combinations thereof.

The sensing unit 140 is typically implemented using one or more sensors configured to sense internal information of the mobile terminal, the surrounding environment of the mobile terminal, user information, and the like. For example, in FIG. 1A, the sensing unit 140 is shown having a proximity sensor 141 and an illumination sensor 142.

If desired, the sensing unit 140 may alternatively or additionally include other types of sensors or devices, such as a touch sensor, an acceleration sensor, a magnetic sensor, a G-sensor, a gyroscope sensor, a motion sensor, an RGB sensor, an infrared (IR) sensor, a finger scan sensor, a ultrasonic sensor, an optical sensor (for example, camera 121), a microphone 122, a battery gauge, an environment sensor (for example, a barometer, a hygrometer, a thermometer, a radiation detection sensor, a thermal sensor, and a gas sensor, among others), and a chemical sensor (for example, an electronic nose, a health care sensor, a biometric sensor, and the like), to name a few. The mobile terminal 100 may be configured to utilize information obtained from sensing unit 140, and in particular, information obtained from one or more sensors of the sensing unit 140, and combinations thereof.

The output unit 150 is typically configured to output various types of information, such as audio, video, tactile output, and the like. The output unit 150 is shown having a display unit 151, an audio output module 152, a haptic module 153, and an optical output module 154. The display unit 151 may have an inter-layered structure or an integrated structure with a touch sensor in order to facilitate a touch screen. The touch screen may provide an output interface between the mobile terminal 100 and a user, as well as function as the user input unit 123 which provides an input interface between the mobile terminal 100 and the user.

The interface unit 160 serves as an interface with various types of external devices that can be coupled to the mobile terminal 100. The interface unit 160, for example, may include any of wired or wireless ports, external power supply ports, wired or wireless data ports, memory card ports, ports for connecting a device having an identification module, audio input/output (I/O) ports, video I/O ports, earphone ports, and the like. In some cases, the mobile terminal 100 may perform assorted control functions associated with a connected external device, in response to the external device being connected to the interface unit 160.

The memory 170 is typically implemented to store data to support various functions or features of the mobile terminal 100. For instance, the memory 170 may be configured to store application programs executed in the mobile terminal 100, data or instructions for operations of the mobile terminal 100, and the like. Some of these application programs may be downloaded from an external server via wireless communication. Other application programs may be installed within the mobile terminal 100 at time of manufacturing or shipping, which is typically the case for basic functions of the mobile terminal 100 (for example, receiving a call, placing a call, receiving a message, sending a message, and the like). It is common for application programs to be stored in the memory 170, installed in the mobile terminal 100, and executed by the controller 180 to perform an operation (or function) for the mobile terminal 100.

The controller 180 typically functions to control overall operation of the mobile terminal 100, in addition to the operations associated with the application programs. The controller 180 can provide or process information or functions appropriate for a user by processing signals, data, information and the like, which are input or output by the various components depicted in Fig. 1A, or activating application programs stored in the memory 170. As one example, the controller 180 controls some or all of the components illustrated in FIGS. 1A-1C according to the execution of an application program that have been stored in the memory 170.

The power supply unit 190 can be configured to receive external power or provide internal power in order to supply appropriate power required for operating elements and components included in the mobile terminal 100. The power supply unit 190 may include a battery, and the battery may be configured to be embedded in the terminal body, or configured to be detachable from the terminal body.

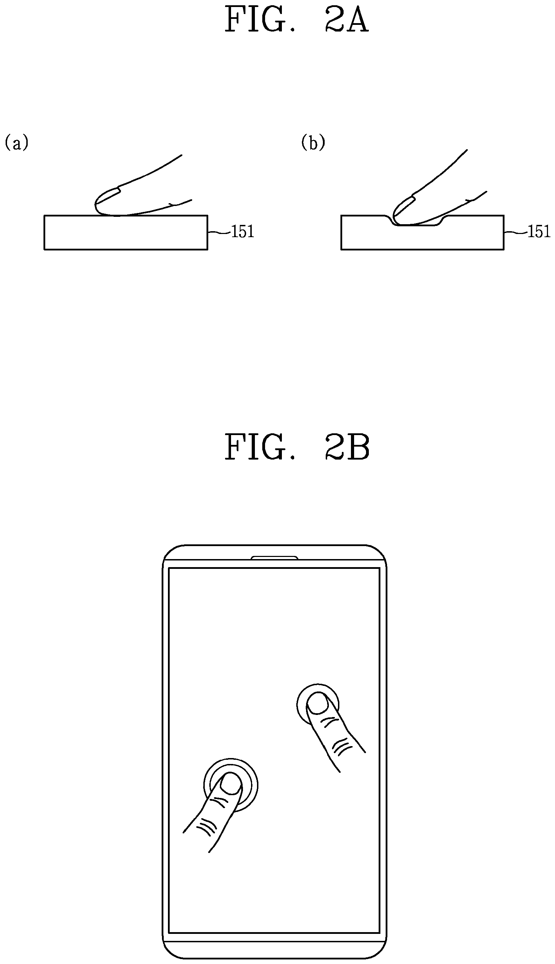

FIG. 2A is a conceptual diagram illustrating a general touch input and a touch input satisfying a condition associated with a touch force, and FIG. 2B is a conceptual diagram illustrating a multi-force touch. A touch sensor according to an embodiment of the present invention can detect a touch force of the touch input. The touch force is a pressure that a touch target object exerts on a touch screen. That is, the touch sensor can detect a touch area and a touch force. When the touch input is applied to a touch sensor, a signal (signals) corresponding to the touch input is (are) sent to a touch controller. After processing the signal(s), the touch controller transfers corresponding data to a controller 180. Based on whether or not the touch force of the touch input satisfies the condition associated with the touch force, the controller 180 can determine what type of touch input is applied.

The condition associated with the touch force can be a condition that the touch force should be equal to or stronger than a reference force. A reference value can be set in advance during manufacturing of the mobile terminal. More specifically, as illustrated in FIG. 2A(a), the touch sensor can detect that the touch target object (for example, a human hand) comes into contact with a touch screen 151. In addition, the touch sensor can detect the touch force that is exerted on the touch screen. When a touch force of the detected touch input is lower than the reference force, the controller 180 can determine the detected touch input as a general touch input.

In addition, as illustrated in FIG. 2A(b), the touch sensor can detect the touch force of the touch input, which is exerted by the touch target object (for example, a human hand) on the touch screen 151. In this instance, if the touch force of the detected touch input is equal to or stronger than the reference force, the controller 180 can determine the detected touch input as a force touch input. In the present specification, the force touch input is used as a term referring to the touch input of which the touch force is equal to or stronger than the reference force. Further, this term can be arbitrarily changed by a person of ordinary skill in the related art, and can also be replaced with a force touch, a pressing-down touch, a pressing-down touch input, a pressing-down touch, or the like.

Multiple reference forces can be prepared. For example, the reference force can be set to be a first force or a second force that is stronger than the first force. In this instance, the controller 180 can determine what type of touch input is applied, depending on the touch force of the touch input. For example, when the touch force of the touch input is a value between the first force to the second force or a value between the second force to a third force, the controller 180 determines the two touch inputs as different touch inputs.

Therefore, based on the touch force of the touch input, the controller 180 can perform different functions. For example, the controller 180 executes a message application based on the application of the touch input that has the first touch force, and performs a preview function of the message application based on the application of the touch input that has the second touch force. Further, the touch sensor can detect that two or more touch inputs are exerted on the touch screen. The two or more touch inputs can be named as multiple touch inputs or a multi-touch input.

Further, as illustrated in FIG. 2B, when the touch force of at least one touch input, among the two or more touch inputs, is equal to or stronger than the reference force, the controller 180 can recognize this touch input as the multi-force touch input. In the present specification, the two or more touch inputs, among which at least one touch input has the touch force that is equal or stronger than the reference force, are described as the term "multi-force touch input."

However, the term can be changed by a person of ordinary skill in the related art with another term that has the same meaning. The touch input that satisfies the condition associated with the touch force according to an embodiment of the present invention is described above.

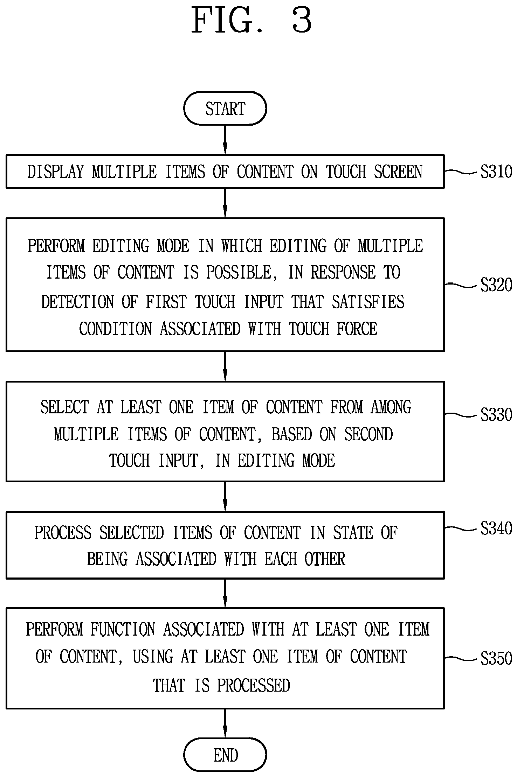

A method of fast editing multiple items of content utilizing the force touch input in the mobile terminal according to an embodiment of the present invention will be described below. In particular, FIG. 3 is a flowchart illustrating the method in which the mobile terminal according to an embodiment of the present invention fast edits the multiple items of content utilizing the force touch input.

With reference to FIG. 3, the controller 180 can display the multiple items of content on the touch screen (S310). The content described above is visual information that is displayed on the touch screen. For example, the items of content can include memo information that includes a letter, a symbol, and a number, an image, a moving image, pieces of visual information that are included in a webpage, an icon, a widget, and the like.

Based on a user control command, the controller 180 can display the multiple items of content on the touch screen. For example, when a user control command for execution of a memo application is applied, the controller 180 can display the memo information on the touch screen. As another example, when a user control command for execution of a web browser application is applied, the controller 180 can display a webpage.

In response to detection of a first touch input that satisfies the condition associated with the touch force, the controller 180 performs an editing mode in which editing of the multiple items of content is possible (S320). When the multiple items of content are displayed, the controller 180 can detect that first touch input that satisfies the condition associated with the touch force is applied on the touch screen. For example, the controller 180 can detect the first touch input that has a force which is equal to or stronger than the reference force. The first touch input is the force touch input.

The first touch input can be applied to a specific area of the touch screen. The specific area can be an area on which a keyboard image is displayed or an empty area on which content is not displayed. However, the present invention is not limited to this, and even when the first touch input is applied an arbitrary area of the touch screen, the editing mode can be performed. A setting of an area to which the first touch input is applied can be performed during the manufacturing of the mobile terminal.

In response to the detection of the first touch input, the controller 180 can perform the editing mode. The editing mode refers a state in which the mobile terminal can select one or more items of content from among the multiple items of content that are displayed on a display unit. In addition, in the editing mode, an editing function associated with content can be provided. The editing function can be a function, such as changing of a content color or changing of an output size.

When the editing mode is performed, the controller 180 can output a graphic object for indicating the editing mode. For example, the controller 180 can output a gray-in-color box to an area to which the first touch input is applied. Therefore, a user can recognize that the editing mode is currently performed.

Further, based on the continuous detection of the first touch input after performing the editing mode, the controller 180 can maintain the editing mode. In this instance, when the first touch input is released from the touch screen, the controller 180 can end the editing mode. Accordingly, the user can conveniently control the performing and ending of the editing mode. However, the present invention is not limited to this.

That is, regardless of whether or not the first touch input is maintained, the controller 180 can perform the editing mode. In this instance, in response to the application of the user control command for ending the editing mode, the controller 180 can end the editing mode.

In addition, based on a second touch input, in the editing mode, the controller 180 can select at least one item of content from among the multiple items of content (S330). When the editing mode is performed, the controller 180 can detect the second touch input. The second touch input can be a short touch input or a drag tout input. In addition, the second touch input can be the multi-force touch input that is applied along with the first touch input, or can be a single touch input in which only the second touch input is applied.

Based on the second touch input that is applied while the editing function is being performed, the controller 180 can select content that is displayed on an area to which the second touch input is applied. In addition, when the second touch input is detected on different areas, the controller 180 can select at least one item of content that is displayed on the different areas to which the second touch input is applied. Therefore, according to an embodiment of the present invention, in the editing mode, two or more items of content can be easily selected that are displayed on different areas.

The controller 180 visually distinguishes the content selected by the second touch input from the other items of content for display. For a method of visual distinguishing for display, a color, a shadow, a mark, or the like can be used. Further, when the second touch input is applied again to specific content that is at least one selected item of content, the controller 180 can cancel the selection of the specific content. That is, the controller 180 can set the specific content to be in a non-selected state.

The controller 180 can process at least one item of content in a state of being associated with each other (S340). An operation by the controller 180, which processes at least one or more of the items of content in a state of being associated with each other, is an operation that stores at least one item of content in the memory 170 in such a manner as to be used together when performing a function associated with content. In addition, an area in which at least one item of content is stored can be a clipboard area of the memory 170, in which pieces of information is temporarily stored. For example, when performing a pasting function on at least one item of content, the controller 180 can store the at least one item of content in such a manner as to be pasted at the same time. As another example, when performing a sharing function on at least one item of content, the controller 180 can store the at least one item of content in such a manner as to be shared at the same time.

In addition, the controller 180 can store a selection order in which the at least one item of content is selected, in the memory 170, as well. Further, based on a control command for ending the editing mode, the controller 180 can end the editing mode. That is, when an operation of selecting content is completed, the user can input the user control command in order to end the editing mode. For example, based on application of a third touch input that satisfies the condition associated with the touch force, the controller 180 can end the editing mode.

When the editing mode is ended, the controller 180 can end a selection state of the at least one item of content that is selected, as well. Accordingly, the controller 180 can display at least one item of content that is selected, in the same visual form as it does the other items of content. However, although the editing mode is ended, the at least one item of content that is selected can be stored in the clipboard without any change.

The controller 180 can perform a function associated with at least one item of content, using the at least one item of content, which is processed (S350). The function associated with the at least one item of content can be a sharing function, a search function, a group-viewing function, a link group-viewing function, or the like.

The pasting function is a function of pasting content stored in the clipboard into a memo pad or a document such as a scheduler. The sharing function is a function of transferring content to another terminal or another application that runs on the terminal itself. The search function is a function of retrieving information associated with content from a web server or a memory.

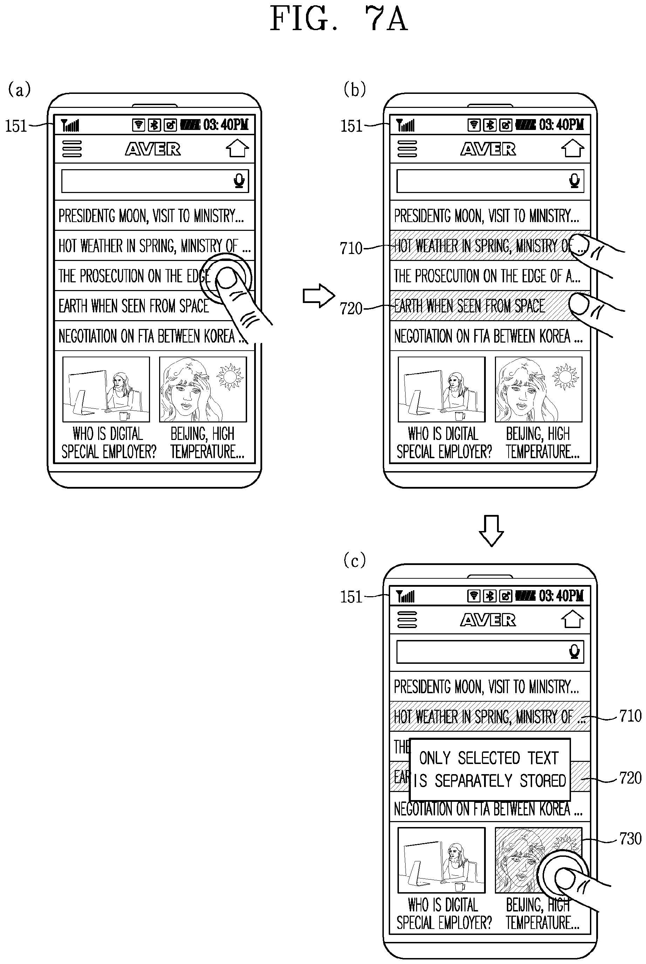

The group viewing function can be a function of outputting items of specific content collectively on one page. The link group-viewing function can be a function of sequentially making connections to selected links. The group viewing and link group-viewing functions are more specifically described with reference to FIGs. 7A to FIG. 9C.

When a control command for performing the function associated with at least one item of content is received, the controller 180 can perform the function associated with at least one item of content using the at least one item of content. For example, in response to a control command for performing the pasting function, the controller 180 can paste at least one item of content into the memo pad. As another example, in response to control command for performing the sharing function, the controller 180 can transfer at least one item of content to a preset external terminal.

Based on the order in which at least one item of content is selected, the controller 180 can perform the function associated with at least one item of content. For example, when performing the pasting function, the controller 180 can paste at least one item of content in the order in which at least one item of content is selected.

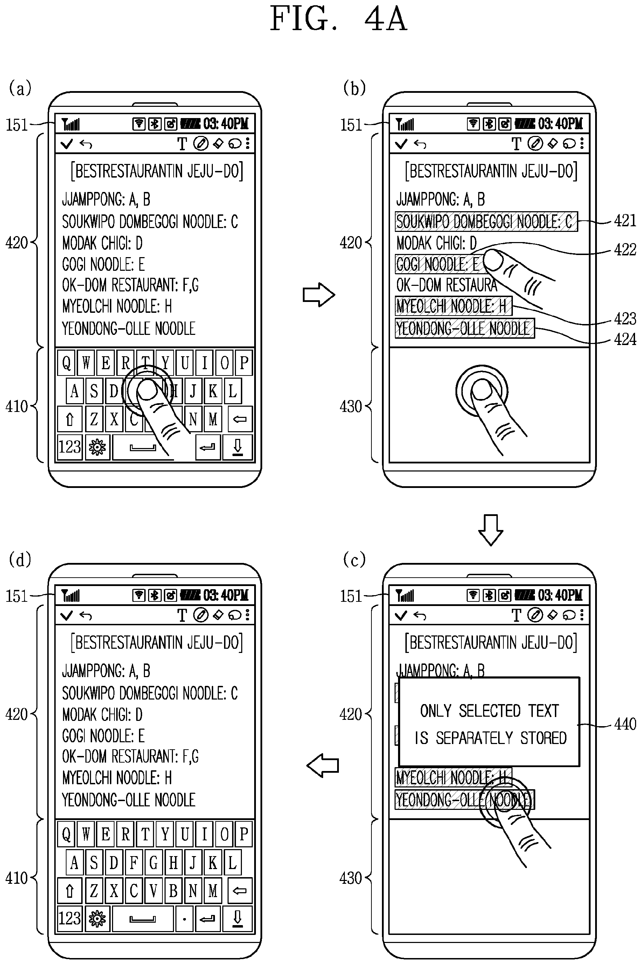

The method is described above in which multiple items of content is selected in a fast, easy manner and then the function associated with content is performed. An embodiment in which a function of copying and pasting multiple items of content using this method is performed will be specifically described with respect to the drawings. In particular, FIGs. 4A to 4C are conceptual diagrams illustrating the control method in FIG. 3.

As illustrated in FIG. 4A(a), first, the controller 180 can execute the memo application that provides a function of generating and editing the memo information. The controller 180 can output an execution screen for the memo application on the touch screen. The memo information that includes a keyboard image 410 and multiple items of content 420 can be included in the execution screen for the memo application.

In response to the application of the first touch input that satisfies the condition associated with the touch force to an area on which the keyboard image 410, the controller 180 can execute the editing function. In this instance, as illustrated in FIG. 4A(b), the controller 180 can output a track pad image 430 instead of the keyboard image 410. Accordingly, the user can recognize that the editing mode is currently being performed.

As illustrated in FIG. 4A(b), in the editing mode, based on the second touch input, the controller 180 can select at least one item of content 421, 422, 423, or 424 from among multiple items of content 420. The second touch input can be the multi-force touch input, as the touch input that is applied when the touch input is maintained. Further, the controller 180 can set a shadow effect for at least one item of content 421, 422, 423, or 424, so the at least one item of content 421, 422, 423, or 424 is visually distinguished from the other items of content.

As illustrated in FIG. 4A(c), based on the application of the force touch input to the content 424 that is lastly selected, the controller 180 can perform the association process on the at least one item of content 421, 422, 423, or 424 that is selected. Then, the guidance information "Only selected text is separately stored" can be output on the touch screen 151.

As illustrated in FIG. 4A(d), when the first touch input is no longer detected, the controller 180 can end the editing mode. In this instance, instead of the track pad image 430, the keyboard image 410 is output back on the touch screen 151.

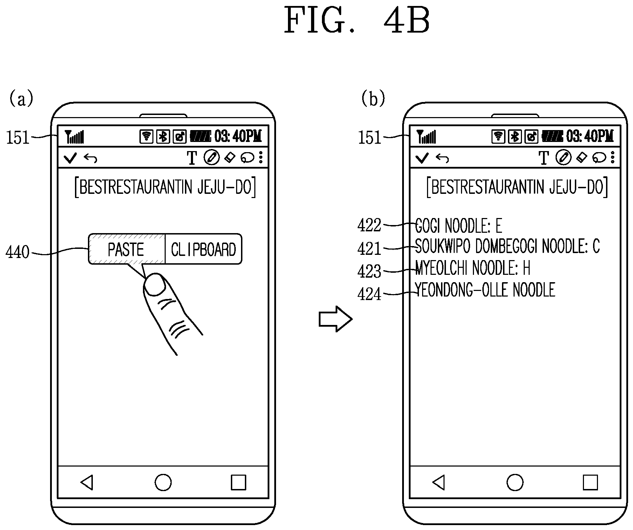

With reference to FIG. 4B(a), when at least one or more of the items of content are processed in a state of being associated with each other, the controller 180 can perform the pasting function in order to add at least one item of content to new memo information. For example, based on the application of a long touch input to an execution screen including the new memo information to which at least one item of content is to be added, the controller 180 can output a function list 440 including the function associated with content.

The function list 440 can include functions that are performable using the selected content, as entries. Accordingly, the function list 440 can be changed according to the selected content. For example, the function list 440 can include the pasting function and a clipboard function of accessing the clipboard. The clipboard function is a function of outputting items of content stored in the clipboard. Alternatively, the function list 440 can include a copy function and the pasting function.

As illustrated in FIG. 4B(b), based on the touch input on an item indicating the pasting function, the controller 180 can paste at least one item of content into new memo information. Further, the controller 180 can output at least one item of content in the selection order in which the at least one item of content is selected. That is, the controller 180 can output at least one item of content in the selection order in which the at least one item of content is selected, not in the order in which the at least one item of content is output.

For example, as illustrated in FIG. 4A(b), at least one item of content in original memo information is output in this order: "SOUKWIPO DOMBEGOGI NOODLE C 421,""GOGI NOODLE E 422," "MYEOLCHI NOODLE H 423," "YEONDONG-OLLE NOODLE 424." However, as illustrated in FIG. 4B(b), at least one item of content in new memo information is output in the following order of selection: "GOGI NOODLE E 422," "SOUKWIPO DOMBEGOGI NOODLE C 421," "MYEOLCHI NOODLE H 423," "YEONDONG-OLLE NOODLE 424."

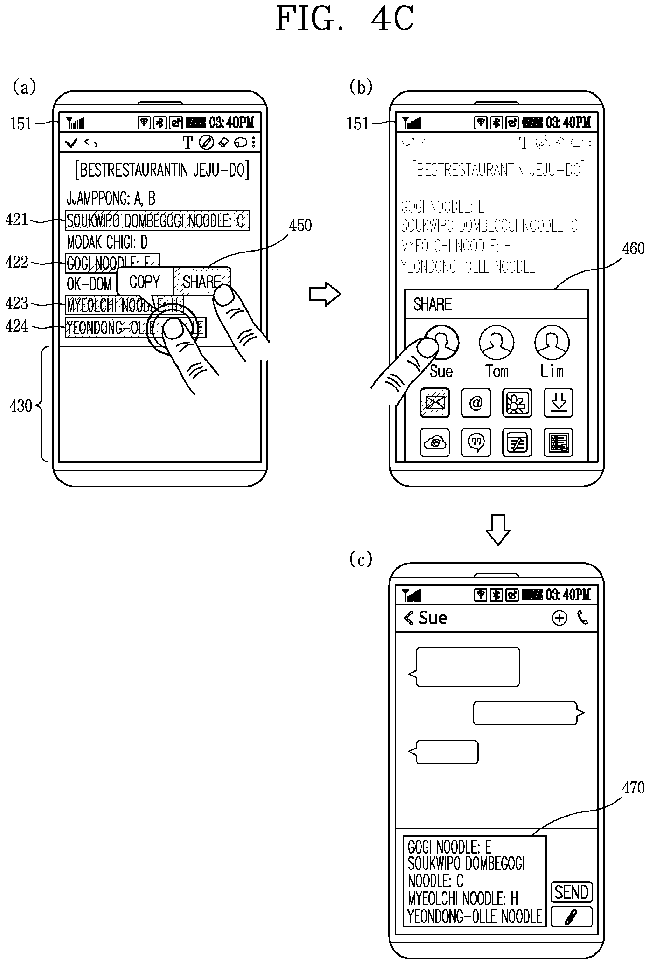

Further, the controller 180 can perform the function associated with at least one item of content at the same time that the editing mode is ended. More specifically, with reference to FIG. 4C(a), in response to the application of the force touch input to the last content 424 among the items of content 421, 422, 423, and 424, the controller 180 can output a function list 450 including the function associated with content, at the same time that the editing mode is ended.

As illustrated in FIG. 4C(b), when the sharing function is selected based on the touch input on the sharing function, the controller 180 can output sharing target list 460 from which a sharing target for sharing at least one item of content is selected. The sharing target list 460 can include contact information that is stored in a telephone directory, an icon for an application in which content is sharable and the like.

As illustrated in FIG. 4C(c), when contact information "SUE" of a specific person is selected, the controller 180 can execute the message application in order to transfer a message including at least one item of content to the specific person. The controller 180 can control the message application so at least one item of content is output to an input window 470 into which contents of a message are input. Therefore, the user can share at least one item of content with the specific person through the message.

The method of performing the function of copying and pasting multiple items of content is described above. According to an embodiment of the present invention, the function of copying and pasting multiple items of content using the force touch input is performed in an easy, fast manner, and thus user convenience can be improved.

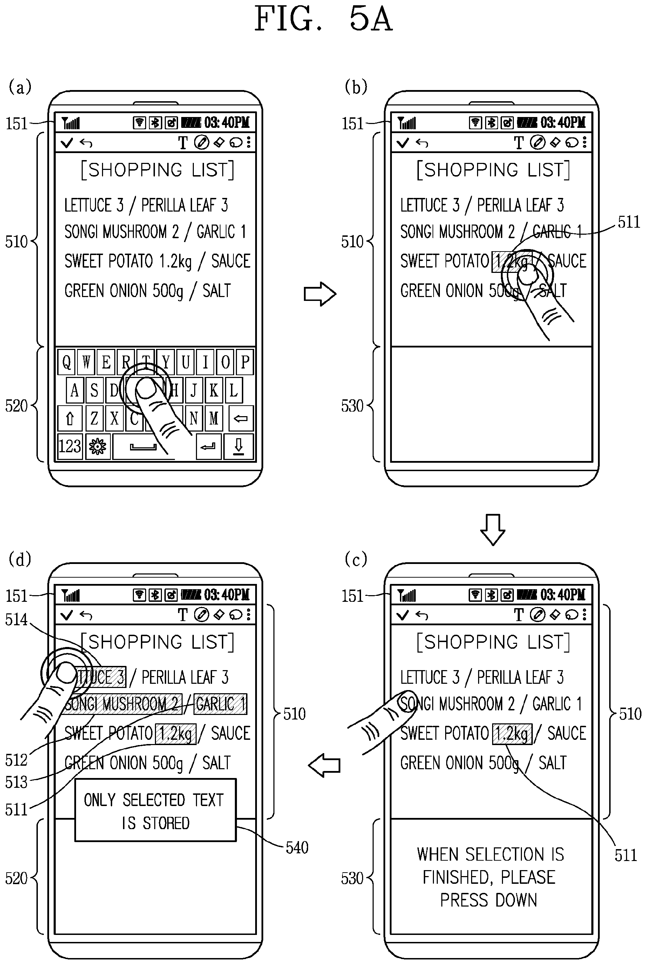

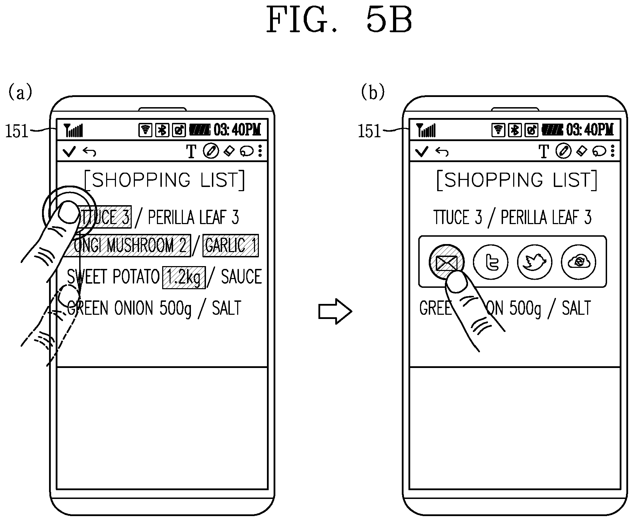

Another embodiment will be described below in which the function of copying and pasting multiple items of content is performed using the force touch input. In particular, FIGs. 5A and 5B are conceptual diagrams illustrating another embodiment in which the function of copying and pasting multiple items of content is performed using the force touch input.

As illustrated in FIG. 5A(a), when multiple items of content 510 and a keyboard image 520 are displayed, in response to the application of the first touch input satisfying the condition associated with the touch force to an area on which the keyboard image 520 is displayed, the controller 180 can perform the editing mode. Further, after the editing mode is performed, although the first touch input is not detected, the controller 180 can continue editing mode. Instead of the keyboard image 520, a track pad image 530 for indicating that the editing mode is being performed can be output to the touch screen 151.

As illustrated in FIG. 5A(b), in the editing mode, based on the application of the force touch input to first content 511 among multiple items of content, the controller 180 can set the first content 511 to be in the selection state, and can access a mode in which selection of two or more items of content is possible. Furthermore, in the editing mode, based on the application of the short touch input to the first content 511, the controller 180 can select the first content 511 and then can end the editing mode.

As illustrated in FIG. 5A(c), after the force touch input is applied to the first content 511, based on the short touch input, the controller 180 can sequentially select second content 512, third content 513, and fourth content 514. In addition, after multiple items of content are selected, guidance information (for example, "When selection is finished, please press down") for guiding the user through the ending of the editing can be output on the track pad image 530 on the touch screen 151 in a superimposed manner.

As illustrated in FIG. 5A(d), when the force touch input is applied to the fourth content 514 that is lastly selected, the controller 180 can process the selected four items of content in state of being associated with each other and then can end the editing mode. Then, as illustrated in FIG. 5A(d), the controller 180 can output alerting information 540 which alerts the user that the four items of content are processed in the state of being associated with each other, on the touch screen.

In addition, as illustrated in FIG. 5B(a) and 5B(b), when the drag input is applied in succession to the force touch input that is applied to the fourth content 514 that is lastly selected, the controller 180 can perform the sharing function for sharing the at least one item of content that is selected. In addition, the controller 180 can end the editing mode at the same time that the sharing function is performed. Therefore, according to an embodiment of the present invention, with only an operation using a user's one hand, the function of selecting and editing multiple items of content can be provided, thereby improving user convenience.

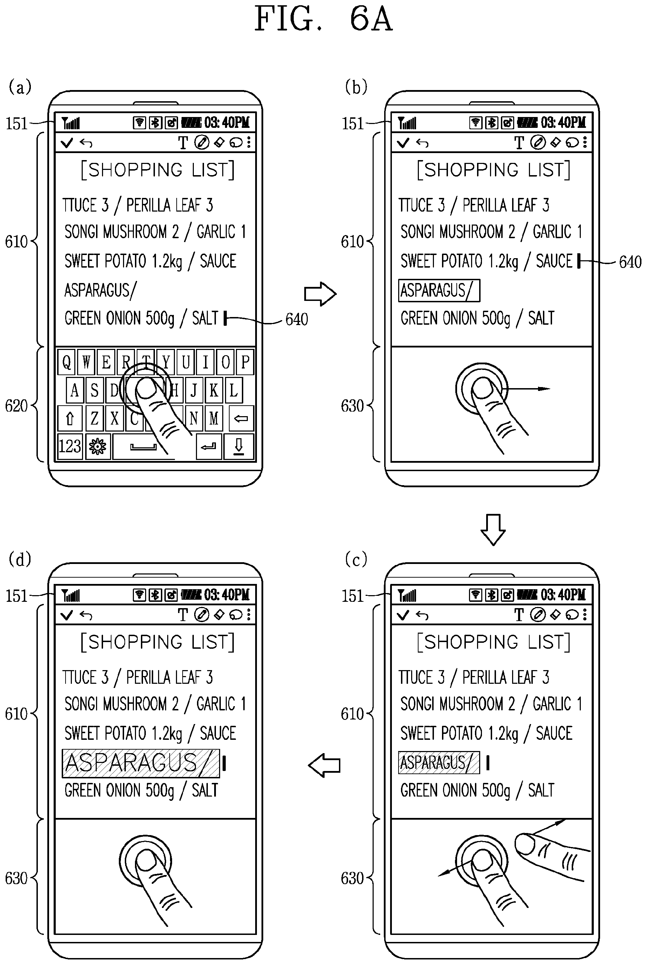

A method of editing content that is selected in the editing mode will be described below. In particular, FIGs. 6A(a) to 6A(c) are conceptual diagrams illustrating the method of editing the content that is selected in the editing mode. In the editing mode, based on different touch modes that are applied on the track pad image, the controller 180 can edit at least one item of content that is selected, in a different technique.

With reference to FIG. 6A(a), based on the application of the force touch input to a keyboard mage 620, the controller 180 can perform the editing mode. When the editing mode is performed, instead of the keyboard image 620, the controller 180 can output a track pad image 630.

The track pad image 630 can indicate a touch screen area that serves as a mouse pad. That is, the controller 180 can move a cursor along a touch trace of the touch input that is applied on the track pad image 630. Accordingly, the controller 180 can detect the touch trace of the touch input that is applied to an area on which the track pad image 630 is displayed, and can move the cursor along the detected touch trace.

As illustrated in FIG. 6A(b), based on the application of the drag input to the area on which the track pad image 630, the controller 180 can move a cursor 640 to a position at which specific content 640 (for example, "asparagus") is displayed. In addition, after the cursor is moved to the position at which the specific content 640 is displayed, based on the force touch input and the drag input that is applied in succession to the force touch input, the controller 180 can select the specific content 640. When the specific content 640 is selected, the controller 180 can display the selected specific content 640 to be visually distinguished from the other items of content.

As illustrated in FIG. 6A(c), when the specific content 640 is selected, the controller 180 can detect that the multi-force touch input is applied. The multi-force touch input can be made up of the first touch input that satisfies the condition associated with the touch force and the second touch input that does not satisfy the condition associated with the touch force.

As illustrated in FIG. 6A(d), when it is detected that the first touch input and the second touch input are moved in a direction away from each other, the controller 180 can increase an output size of the selected specific content 640. In addition, when it is detected that the first touch input and the second touch input are moved in a direction close to each other, the controller 180 can decrease the output size of the selected specific content 640. Therefore, according to an embodiment of the present invention, in the editing mode, when the multi-force touch input is applied, the function of editing content can be performed.

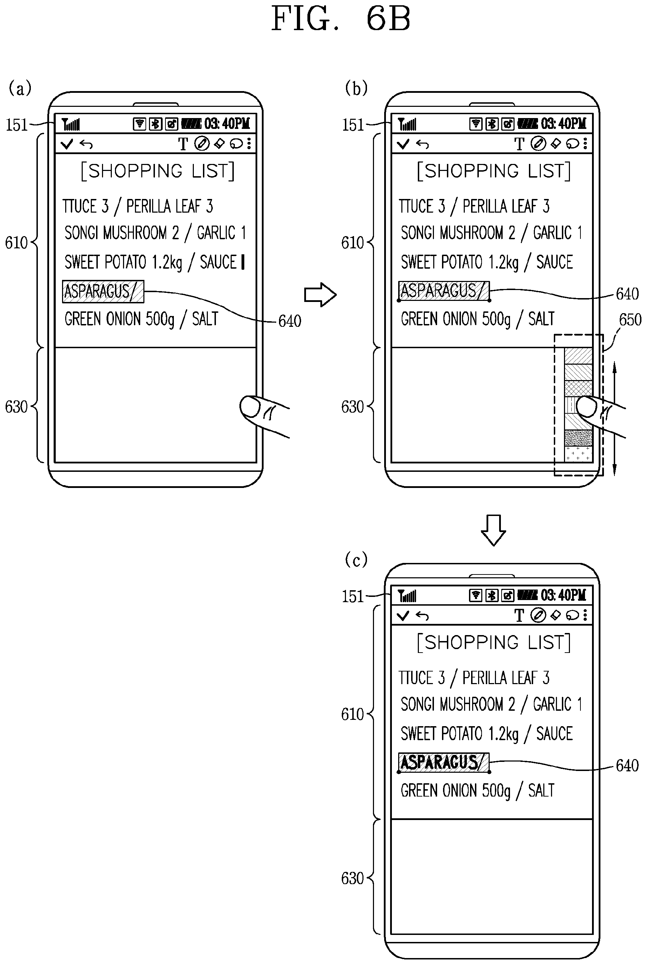

In addition, as illustrated in FIG. 6B(a), based on the application of the touch input to an edge area of the track pad image 630, the controller 180 can perform a function of setting an output color of content. As illustrated in FIG. 6B(b), when the function of setting the output color, the controller 180 can output an output color list 650 to the edge area of the track pad image 630. As illustrated in FIG. 6B(c), when the touch input is applied to a specific color among colors that are included in the output color list 650, the controller 180 can set the output color of the selected specific content 640.

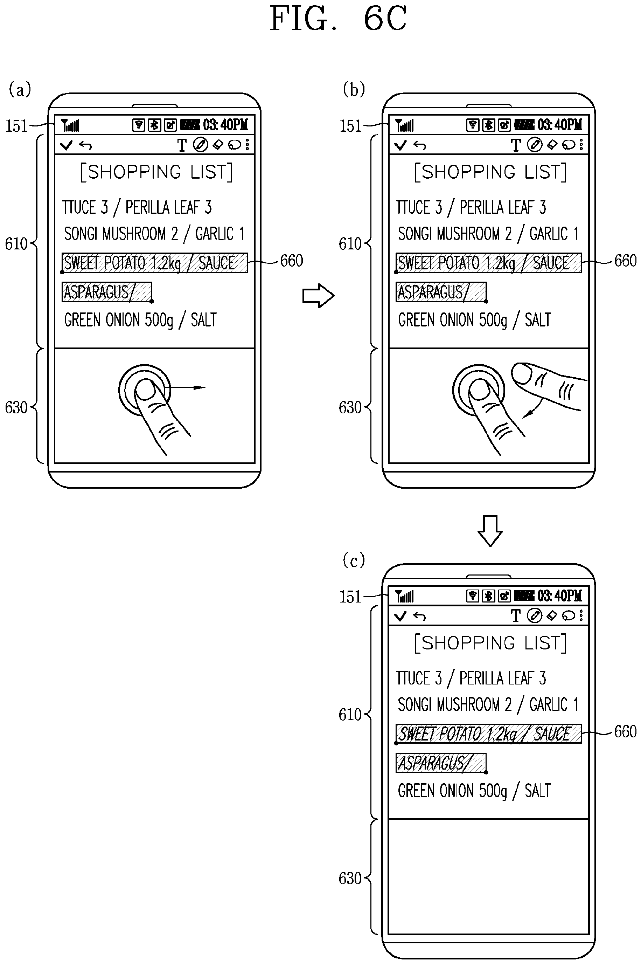

In addition, in the editing mode, based on the multi-force touch input, the controller 180 can change a font for content. As illustrated in FIG. 6C(a), in the editing mode, based on the force touch input and the drag input that is applied in succession to the force touch input, the controller 180 can select specific content 660. As illustrated in FIGs. 6C(b) and 6C(c), when the force touch input and an input that rotates about the force touch input are applied at the same time, the controller 180 can change a font for the selected specific content 660 to an italic font.

The method of editing content using the multi-force touch input in the editing mode is described above. A method of fast selecting and editing multiple items of content to which different webpages are linked will be described below. In particular, FIGs. 7A to 7C are conceptual diagrams illustrating the method of fast selecting and editing multiple items of content to which different webpages are linked.

As described above, in the editing mode, the controller 180 can select multiple items of content to which different webpages are linked. To do this, first, the controller 180 can perform the editing mode. For example, as illustrated in FIG. 7A(a), when the webpage is displayed that includes the multiple items of content to which different webpages are linked, in response to the application of the force touch input to an empty area, the controller 180 can perform the editing mode. As another example, in response to the application of the force touch input to two points at the same time, the controller 180 can perform the editing mode.

As illustrated in FIG. 7A(b), in the editing mode, based on the short touch input, the controller 180 can select first content 710 and second content 720. As illustrated in FIG. 7A(c), when the first content 710 and the second content 720 are selected, and when the force touch input is applied to third content 730, the controller 180 can process the first content 710, the second content 720, and the third content 730 in a state of being associated with each other. For example, the controller 180 can store the first content 710, the second content 720, the third content 730, and an address of a webpage that is linked to each of the first content 710, the second content 720, and the third content 730, in the selection order.

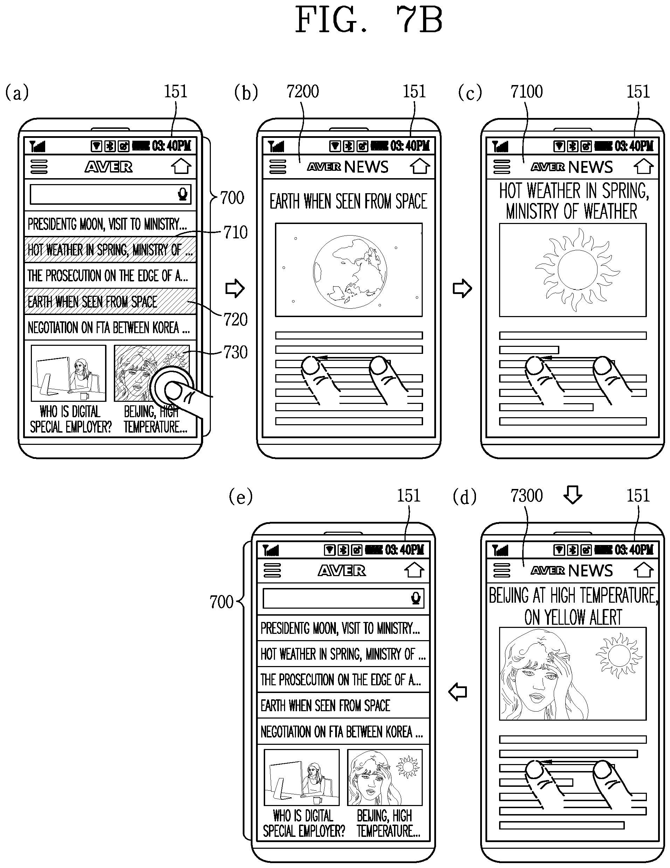

As illustrated in FIG. 7B(a), in response to the application of the force touch input to the third content 730 that is lastly selected, the controller 180 can make a connection to a webpage that is linked to the content that is earliest selected among the first content 710, the second content 720, and the third content 730 that are selected. For example, as illustrated in FIG. 7B(b), when the second content 720, the first content 710, and the third content 730 are selected in this order, the controller 180 can firstly make a connection to a webpage 7200 that is linked to the second content 720.

In addition, in response to a SWYPE input, the controller 180 can make connections to webpages that are linked to the other items of content, in the selection order in which the second content 720, the first content 710, and the third content 730 are selected. For example, as illustrated in FIG. 7B(c), when the SWYPE input is applied to the webpage 7200 that is linked to the second content 720, a connection can be made to a webpage 7100 that is linked to the first content 710 which is selected in succession to the second content 720.

Likewise, with respect to FIG. 7B(d), when the SWYPE input is applied to the webpage 7100 that is linked to the first content 710, the controller 180 can make a connection to a webpage 7300 that is linked to the third content 730. That is, according to an embodiment of the present invention, connections are sequentially made to webpages that are linked to selected items of content, through the SWYPE input, and thus the webpages that are linked to the selected items of content can be successively viewed.

Further, with reference with FIG. 7B(e), when the SWYPE input is applied to the webpage 7300 that is linked to the third content 730 which is lastly selected, the controller 180 can make connections back to the webpage that includes multiple items of content to which different webpages are linked.

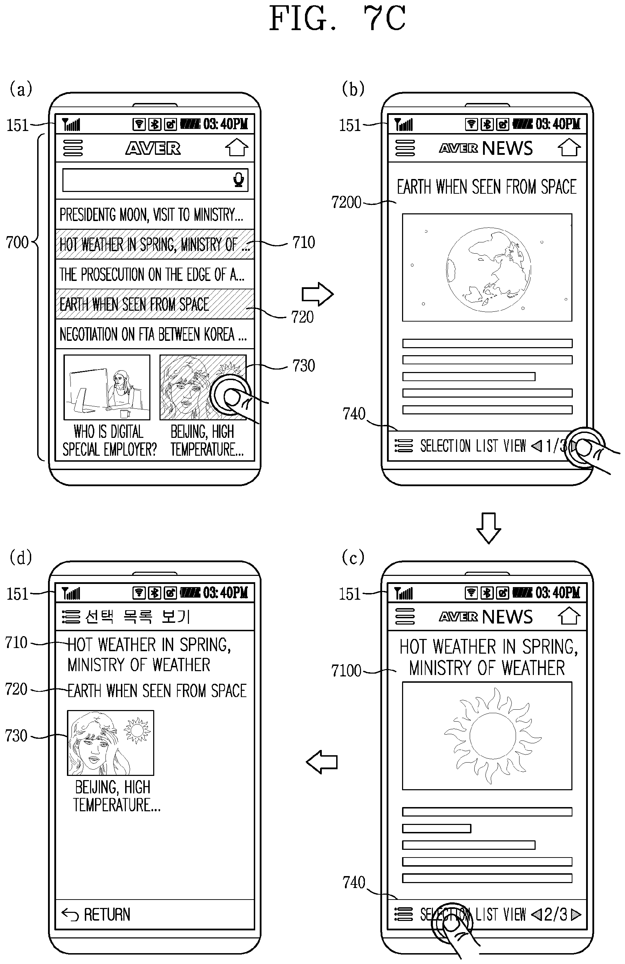

In addition, the controller 180 can output a user interface 740 for sequentially making connections to different webpages that are linked to at least one item of content. With reference to FIG. 7C(a), in response to the application of the force touch input to the third content 730 that is lastly selected, the controller 180 can make a connection to the webpage 7100 that is linked to the first content 710.

When a connection to the webpage 7200 that is linked to the second content 720 is made, the controller 180 can output the user interface 740 for sequentially making connections to different webpages. As illustrated in FIG. 7C(b), icons for making a connection to a webpage that is linked to different content, and an icon for outputting a list of items of selected content can be included in the user interface 740.

As illustrated in FIG. 7C(b), based on the application of the touch input to the icon for making a connection to a webpage that is linked to different content, the controller 180 can output the webpage 7100 that is linked to the first content 710. In addition, as illustrated in FIG. 7C(d), based on the application of the touch input to the icon for outputting the list of selected items of content, the selected items of content can be output.

The method of selecting different items of content that are linked to different webpage and of making connections to different webpages is described above. According to an embodiment of the present invention, through the simple touch input, connections to different webpages that are linked to different items of content can be made in an easy, fast manner.

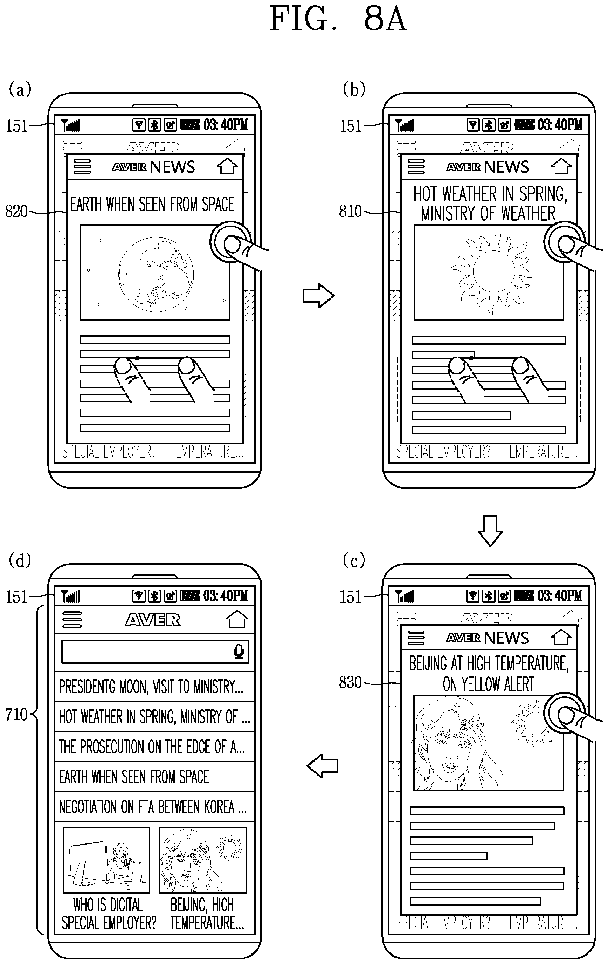

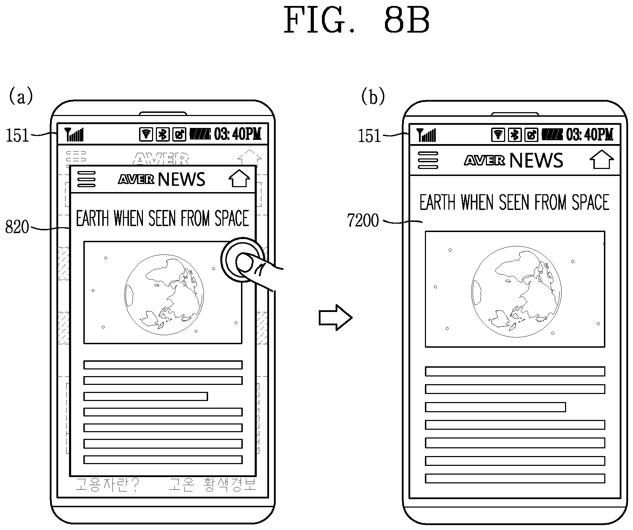

Next, a method of providing a preview screen for different items of content that are linked to different webpages will be described below. In particular, FIGs. 8A and 8B are conceptual diagrams illustrating an aspect in which the preview screen for different items of content that are liked to different webpages are output.

As illustrated in FIG. 8A(a), when the first content 710, the second content 720, and the third content 730 are selected, and in response to the application of the first touch having the first touch force to the third content 730 that is lastly selected, the controller 180 can output a preview screen 820 for the webpage 7200 that is linked to the second content 720 that is firstly selected. In addition, the preview screen is a screen for showing what a webpage is like before making a connection to the webpage.

Based on the first touch input being maintained, the controller 180 can determine whether or not the preview screen is output. That is, when the first touch input is not detected, the controller 180 can cause the preview screen to disappear.

Further, when the first touch input is maintained, and in response to the application of the SWYPE input to the preview screen, the controller 180 can sequentially output preview screens for webpages that are linked to selected items of content. In this instance, the controller 180 can also output the preview screen in the order in which items of content are selected.

More specifically, with reference with FIGs. 8A(b), in response to the application of the SWYPE input to the preview screen 820 for the webpage 7200 that is linked to the second content 720, the controller 180 can output a preview screen 810 for the webpage 7100 that is linked to the first content 710 which is selected in succession to the second content 720. Likewise, with reference to FIG. 8A(c), in response to the application of the SWYPE input to the preview screen 810 for the webpage 7100 that is linked to the first content 710, the controller 180 can output a preview screen 830 for a webpage that is linked to the third content 730 which is selected in succession to the first content 710.

Further, as illustrated in FIG. 8A(d), when the first touch input is no longer detected, the controller 180 can cause the preview screen 830 to disappear. In this instance, the webpage 710 that includes multiple items of content that are displayed before the preview screen is displayed can be output back to the touch screen 151.

In response to the application of the touch input having the second touch force that is stronger than the first touch force to the preview screen, the controller 180 can make a connection to a webpage that corresponds to the preview screen. More specifically, with reference with FIGs. 8B(a), in response to the application of the touch input having the second touch force to the preview screen 820 for the webpage 7200 that is linked to the second content 720, the controller 180 can output the webpage 7200 that is linked to the second content 720.

That is, according to an embodiment of the present invention, the preview screen for multiple webpages is conveniently provided without making a connection to the multiple webpages, and after checking the multiple webpages through the preview screen, the user can selectively make a connection to a necessary webpage.

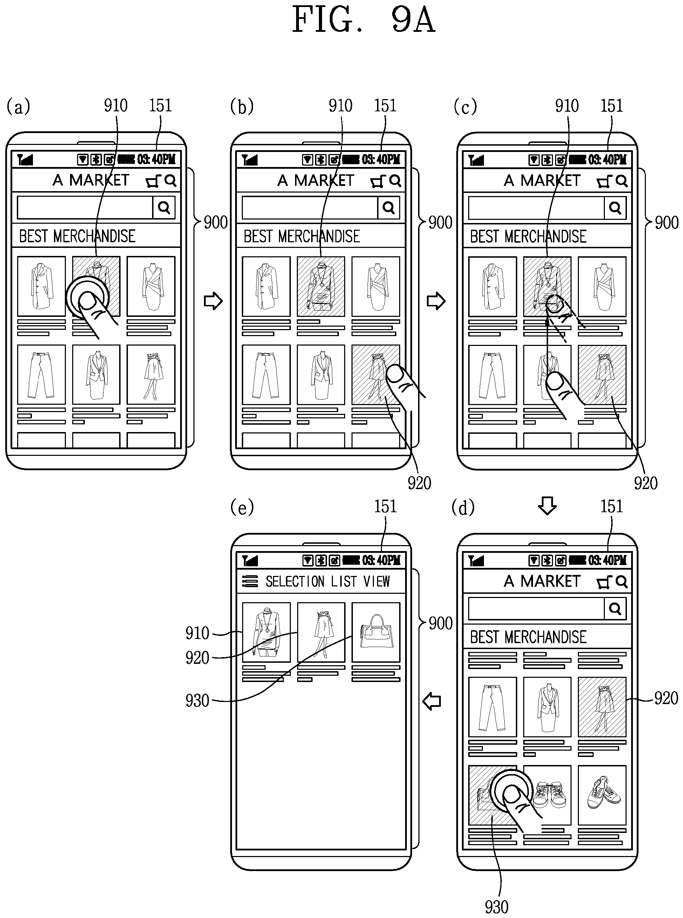

A method of group-viewing at least one item of content among multiple items of content will be described below. In particular, FIGs. 9A to 9C are conceptual diagrams illustrating the function of group-viewing at least one item of content among multiple items of content.

The controller 180 can output a webpage 900 that includes multiple images that are linked to different webpages. Then, with reference to FIG. 9A(a), in response to the application of a multi-force touch input, the controller 180 can perform the editing mode.

As illustrated in FIGs. 9A(a) and 9A(b), in the editing mode, based on the touch input to first content 910 and second content 920, the controller 180 can select the first content 910 and the second content 920. Further, in response to the application of the drag input to the webpage 900 that includes the multiple images that are linked to the different webpages, the controller 180 can scroll through the webpage 900.

Then, as illustrated in FIG. 9A(d), when scrolling is performed on the touch screen 151, at least one or several of the images that are output before the scrolling is performed can disappear, and new images that have not been output before the scrolling can be output. Further, based on the touch input to third content 930, the controller 180 can select the third content 930.

One the other hand, as illustrated in FIG. 9A(e), in response to the application of the force touch input to the third content 930 that is lastly selected, the controller 180 can group the first content 910 the second content 920, and the third content 930 together for output. The function of grouping items of content together in this manner can be named as the group-viewing function. Through the group-viewing function, among a large number of pieces of information, the user can group only necessary pieces of information together, for convenient checking on one page.

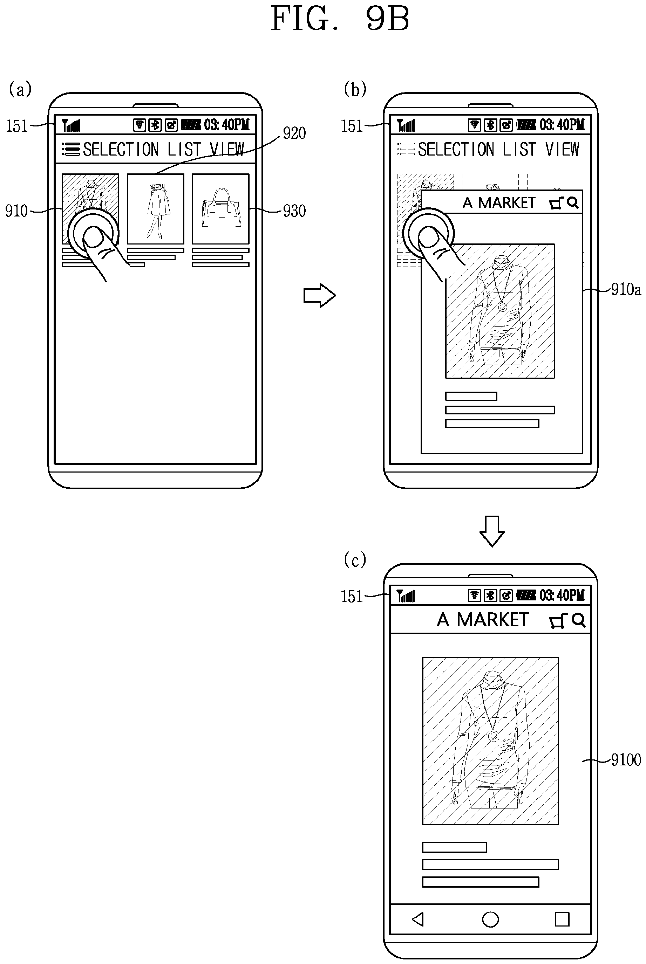

The controller 180 can perform different functions according to the touch forces of the touch inputs that are applied to the selected items of content 910, 920, and 930. More specifically, with reference with FIGs. 9B(a) and 9B(b), when the touch input having the first touch force is applied to the first content 910 among the selected items of content 910, 920, and 930, the controller 180 can output a preview screen 910A for a webpage 9100 that is linked to the first content 910.

Then, with reference to FIG. 9B(c), when the touch input having the second touch force is applied to the preview screen 910A, the controller 180 can make a connection to the webpages 9100 that is linked to the first content 910. Further, the operation that is described with reference to FIGs. 8A to 8C can be applied in the same manner. That is, when the SWYPE input is applied to the preview screens, the controller 180 can sequentially the preview screens for the webpages that are linked to the selected items of content.

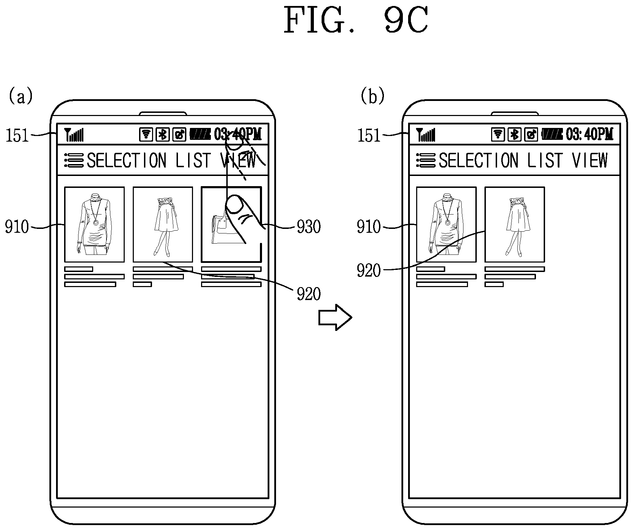

Further, when the selected items of content are grouped together on one page, based on the user control command, the controller 180 can cancel the selection of the content. With reference to FIGs. 9C(a), when the first content 910, the second content 920, and the third content 930 are output, in response to the application of a predetermined-type touch input to the third content 930, the controller 180 can cancel the selection of the third content 930. The predetermined-type touch input can be the drag input in a direction from the lower side of the terminal to the upper side.

As illustrated in FIG. 9C(b), when the selection of the third content 930 is canceled, the controller 180 can cause the third content 930 to disappear from the touch screen 151. The function of group-viewing at least one item of content among multiple items of content is described below.

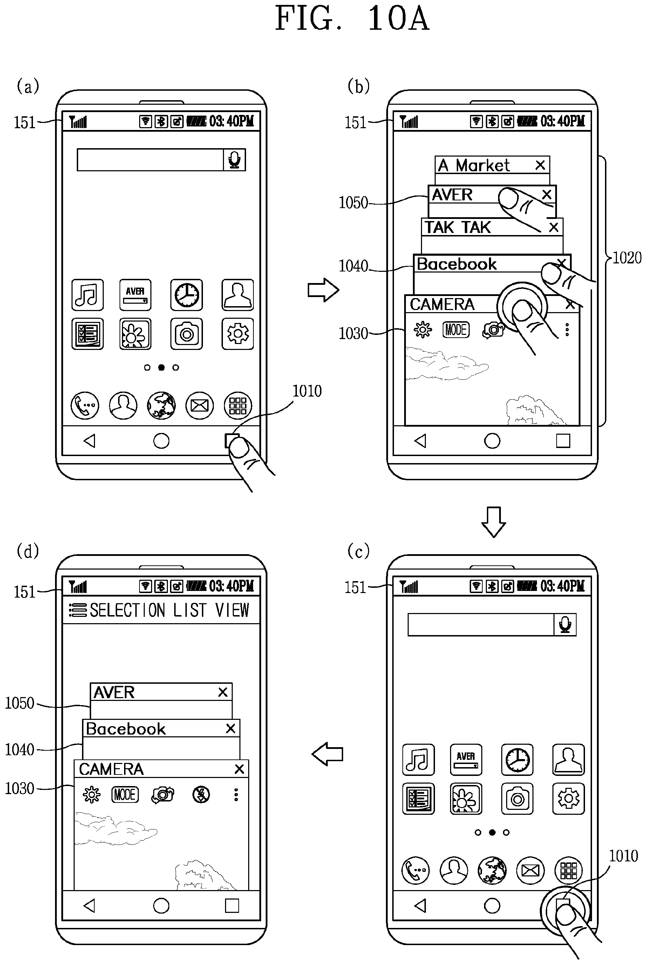

Next, a method of fast accessing an application utilizing the force touch input will be described below. In particular, FIGs. 10A to 10C are diagrams illustrating an embodiment in which the application is accessed utilizing the force touch input. Based on the user control command, the controller 180 can output an application list of recently-executed applications.

For example, as illustrated in FIGs. 10A(a) and 10A(b), in response to the application of the touch input to a graphic object 1010 for outputting the application list of the applications that have recently been executed, the controller 180 can output an application list 1020 that includes the recently-executed applications. The application list 1020 can include an application that is being executed in the foreground, an application that is being executed in the background, and an application that has been executed.

As illustrated in FIG. 10A(b), in response to the application of the force touch input to at least one application 1030, 1040, or 1050, among multiple applications that are included in the application list, the controller 180 can select the at least one application 1030, 1040, or 1050. Then, as illustrated in FIGs. 10A(c) and 10A(d), in response to the application of the force touch input to the graphic object 1010 for outputting the application list of the recently-executed applications, the controller 180 can output at least one application 1030, 1040, or 1050 that is selected. According to an embodiment of the present invention, the application that is selected by the user, among the recently-executed applications, can be accessed in a faster manner.

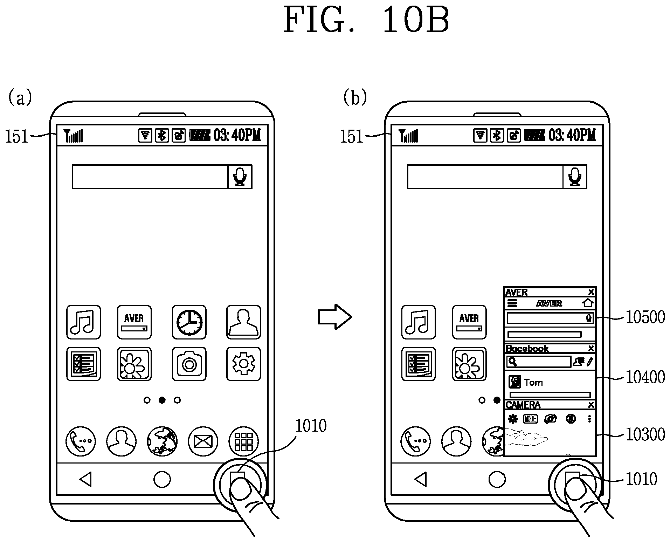

Alternatively, as illustrated in FIGs. 10B(a) and 10B(b), in response to the application of the force touch input to the graphic object 1010 for outputting the application list of the recently-executed applications, the controller 180 can output a thumbnail image 10300, 10400, or 10500 of the at least one application 1030, 1040, or 1050, respectively, which is selected. The thumbnail images 10300, 10400, and 10500 can be output only in a state where the force touch input is maintained. Therefore, according to an embodiment of the present invention, without accessing the application list of the recently-executed application, a list that includes at least one application that is selected can fast be checked to access the application.

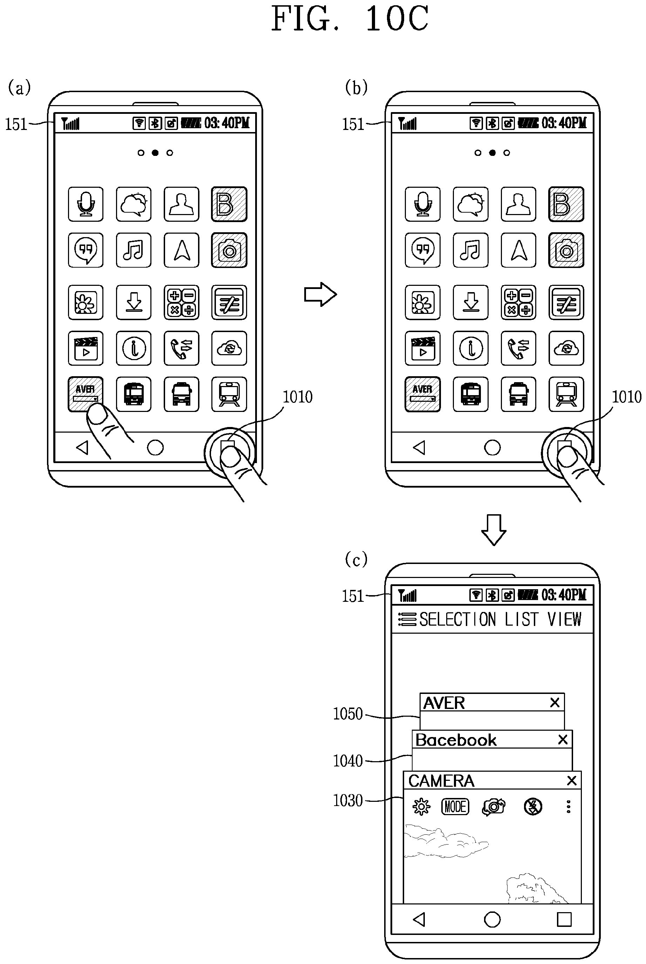

Alternatively, the controller 180 can select at least one icon for fast access to an application, among icons for applications. For example, as illustrated in FIG. 10C(a), in response to the application of the force touch input to the graphic object 1010 for outputting the application list of the recently-executed applications, the controller 180 can access the editing mode.

In the editing mode, based on the short touch input, the controller 180 can select an icon for at least one application, among icons for applications. When the force touch input that is applied to the graphic object 1010 for outputting the application list of the recently-executed applications is released from the graphic object 1010, the controller 180 can perform processing in association with the icon for the at least one application.

Thereafter, as illustrated in FIGs. 10C(b) and 10C(c), when the force touch input is applied to the graphic object 1010 for outputting the application list of the recently-executed applications, the controller 180 can output a list that includes at least one application. Therefore, according to an embodiment of the present invention, frequently-executed icons can be accessed in a faster manner.

Based on the touch input that satisfies the condition associated with the touch force, when the editing mode in which multiple items of content are editable is accessed and at least one item of content is selected from among multiple items of content in the editing mode, the mobile terminal according to the embodiment of the present invention can process at least one or more of the items of content that are selected, in a state of being associated with each other, thereby making the fast editing of the multiple items of content possible.

In addition, according to an embodiment of the present invention, at least one item of content is selected from among multiple items of content with which different links are associated, based on the touch input that the condition associated with the touch force, and the links that are associated with at least one item of content that is selected is associated are sequentially accessed based on the user control command. Thus, fast access to important links is made possible.

Various embodiments may be implemented using a machine-readable medium having instructions stored thereon for execution by a processor to perform various methods presented herein. Examples of possible machine-readable mediums include HDD (Hard Disk Drive), SSD (Solid State Disk), SDD (Silicon Disk Drive), ROM, RAM, CD-ROM, a magnetic tape, a floppy disk, an optical data storage device, the other types of storage mediums presented herein, and combinations thereof. If desired, the machine-readable medium may be realized in the form of a carrier wave (for example, a transmission over the Internet). The processor may include the controller 180 of the mobile terminal.

The foregoing embodiments and advantages are merely exemplary and are not to be considered as limiting the present disclosure. The present teachings can be readily applied to other types of apparatuses. This description is intended to be illustrative, and not to limit the scope of the claims. Many alternatives, modifications, and variations will be apparent to those skilled in the art. The features, structures, methods, and other characteristics of the exemplary embodiments described herein may be combined in various ways to obtain additional and/or alternative exemplary embodiments.

As the present features may be embodied in several forms without departing from the characteristics thereof, it should also be understood that the above-described embodiments are not limited by any of the details of the foregoing description, unless otherwise specified, but rather should be considered broadly within its scope as defined in the appended claims, and therefore all changes and modifications that fall within the metes and bounds of the claims, or equivalents of such metes and bounds are therefore intended to be embraced by the appended claims.

## Claims

1. A mobile terminal comprising:
a touch screen (151); and
a controller (180) configured to:
display multiple items of content on the touch screen (151),
in response to a first touch input on the touch screen (151) corresponding to a force touch, execute an editing mode for editing the multiple items of content,
in response to a second touch input on the touch screen (151), select at least two items of content from among the multiple items of content, and
perform a function using the selected at least two items.

2. The mobile terminal of claim 1, wherein the controller (180) is further configured to output the selected at least two items of content in a selection order in which the at least two items of content are selected.

3. The mobile terminal of claim 1 to 2, wherein in response to application of a third touch input on the touch screen (151) corresponding to the force touch, the controller (180) is further configured to end the editing mode.

4. The mobile terminal of claim 1 to 3, wherein the function comprises:
storing the selected at least two items of content in a memory, and
pasting the selected at least two items on a specific area of the touch screen (151) in an order in which the at two items were selected.

5. The mobile terminal of claim 1, wherein the controller (180) is further configured to distinguishably display the selected at least two items of content.

6. The mobile terminal of claim 1, wherein the controller (180) is further configured to:
display a keyboard image on the touch screen (151), and
in response to the first touch input on the keyboard image, execute the editing mode.

7. The mobile terminal of claim 6, wherein when the editing mode is performed, the controller (180) is further configured to display a track pad image indicating that the editing mode is being performed instead of the keyboard image.

8. The mobile terminal of claim 7, wherein the function comprises:
editing the selected at least two items of content using a different technique based on different touch inputs on the track pad image.

9. The mobile terminal of claim 1 to 3, wherein the selected at least two items of content include a first item linked to a first webpage and a second item linked to a second webpage, and
wherein the function comprises linking a connection between the selected at least two items of content to one of the first webpage and the second webpage.

10. The mobile terminal of claim 9, wherein the controller (180) is further configured to link the connection between the selected at least two items of content to the first webpage when the first item was selected first and to link the connection between the selected at least two items of content to the second webpage when the second item was selected first.

11. The mobile terminal of claim 9, wherein the controller (180) is further configured to:
in response to a third touch input having a first touch force to a specific item of content, display a preview screen for a webpage that is linked to the specific item of content, and
in response to application a fourth touch input having a second touch force different from the first touch force to the preview screen, display the webpage corresponding to the preview screen.

12. The mobile terminal of claim 1 to 3, wherein the multiple items of content are execution screens for applications that are currently being executed, and the selected at least two items of content correspond to a first execution screen for a first currently executing application and a second execution screen for a second currently executing application, and
wherein the controller (180) is further configured to:
display a graphic object on the touch screen (151) for displaying all of the execution screens for the applications that are currently being executed, and
display the first execution screen and the second execution screen in response to a third touch input corresponding to a force touch on the graphic object instead of all of the execution screens for the applications that are currently being executed.

13. The mobile terminal of claim 1 to 3, wherein the force touch comprises a touch input having a force greater than a predetermined force.

14. The mobile terminal of claim 1 to 3, wherein the second touch input includes at least one of multiple separate touch inputs for selecting the at least two items of content, a drag touch for selecting the at least two items of content, and a separate first touch input for selecting a first item of the at least two items of content and a separate second force touch input for selecting a second item of the at least two items of content.

15. A method of controlling a mobile terminal, the method comprising:
displaying multiple items of content on a touch screen (151) of the mobile terminal;
in response to a first touch input on the touch screen (151) corresponding to a force touch, executing, via a controller (180) of the mobile terminal, an editing mode for editing the multiple items of content;
in response to a second touch input on the touch screen (151), selecting, via the controller (180), at least two items of content from among the multiple items of content; and
performing, via the controller (180), a function using the selected at least two items.
